# EUROPÄISCHE PATENTSCHRIFT

(11) **EP 3 775 771 B1**
(45) Veröffentlichungstag und Bekanntmachung des Hinweises auf die Patenterteilung: **16.03.2022**
(21) Anmeldenummer: 19721193.1
(22) Anmeldetag: 08.04.2019
(51) Int. Cl.: G01B 15/04, G01B 17/06, G01B 11/24, B60S 3/04

(54) **VERFAHREN ZUM AUTOMATISCHEN ERKENNEN EINER LADEFLÄCHE EINES FAHRZEUGS UND FAHRZEUGWASCHANLAGE ZUR AUSFÜHRUNG DIESES VERFAHRENS**
METHOD FOR AUTOMATICALLY DETECTING A LOADING SURFACE OF A VEHICLE AND VEHICLE WASHING INSTALLATION FOR CARRYING OUT SAID METHOD
PROCÉDÉ D'IDENTIFICATION AUTOMATIQUE D'UNE SURFACE DE CHARGEMENT D'UN VÉHICULE ET INSTALLATION DE LAVAGE DE VÉHICULE DESTINÉE À LA MISE EN OEUVRE DE CE PROCÉDÉ

(30) Priorität: 09.04.2018 DE 102018108343
(43) Veröffentlichungstag der Anmeldung: 17.02.2021
(73) Patentinhaber: WashTec Holding GmbH, 86153 Augsburg (DE)
(72) Erfinder: STEININGER, Franz, 86424 Dinkelscherben (DE)
(74) Vertreter: Schwarz, Claudia
(86) Internationale Anmeldenummer: PCT/EP2019/058768
(87) Internationale Veröffentlichungsnummer: WO 2019/197317

(56) Entgegenhaltungen:
- US-A1- 2003 145 877
- US-A1- 2008 250 585
- US-A1- 2014 104 622

## Beschreibung

Die vorliegende Erfindung betrifft ein Verfahren zum automatischen Erkennen einer Ladefläche eines Fahrzeugs und eine Fahrzeugwaschanlage.

Fahrzeuge mit Ladeflächen, wie beispielsweise Pick-Ups, Lastkraftwagen mit Pritschen oder Kipper, benötigen besondere Behandlungsabläufe für die automatisierte Fahrzeugreinigung in einer Fahrzeugwaschanlage. Drehmomentgesteuerte horizontale Behandlungsbürsten der Fahrzeugwaschanlage würden aufgrund der geringen Angriffsflächen auf den Bordwänden dieser Fahrzeuge aufsitzen und zu Beschädigungen führen.

Bekannt sind Systeme, die durch manuelle Vorwahl von speziellen Programmen für diesen Fahrzeugtyp den Waschablauf so steuern, dass keine Beschädigung stattfindet. Weiterhin gibt es Systeme, welche die Senkbewegung der Dachbürste überwachen und bei Absenken der Bürste in einem vordefinierten Bereich mit einer vordefinierten Tiefe davon ausgehen, dass es sich um ein Fahrzeug mit Bordwänden handelt.

US 2003/0145877 A1 zeigt ein Fahrzeugladesystem für Fahrzeugwaschstrassen, das die Verwendung einer am Boden montierten Einrichtung zum Erfassen des Vorderreifens des zu waschenden Fahrzeugs eliminiert. Die Fahrzeugwaschstrasse umfasst ein Paar Seitenpositionssensoren, die ein Seitenprofil des Fahrzeugs erfassen und erstellen, wenn das Fahrzeug in die Waschanlage einfährt. Die Fahrzeugwaschstrasse umfasst eine vordere Sensoranordnung, die eine Vielzahl von Einweglichtschranken-Sensoren enthält, die die vordere Stoßstange eines Fahrzeugs erfassen und dem Fahrzeugführer signalisieren, dass er anhalten soll, wenn sich die vordere Stoßstange in der richtigen Position befindet. Ein Überkopfsensor, der sich auf dem Portal befindet, erfasst das obere Profil des Fahrzeugs, das sich in der offenen Waschanlage befindet. Eine Steuereinheit empfängt die Informationen von den verschiedenen Sensoren und steuert das Portal basierend auf den erkannten Parametern des Fahrzeugs.

US 2014/0104622 A1 zeigt ein System zum Bestimmen der äußeren Form von Kraftfahrzeugen, zur Verwendung in Autowaschanlagen. Das System hat Mittel zur Erfassung der äußeren Form eines Kraftfahrzeugs, eine zentrale Betriebssteuereinheit und Softwaremittel zur Handhabung und Verarbeitung von Daten, die auf die zentrale Betriebssteuereinheit geladen sind.

US 2008/0250585 A1 zeigt ein Verfahren zur Steuerung einer Fahrzeugwaschanlage unter Verwendung eines Lichtschnittverfahrens, bei dem mindestens eine Behandlungseinrichtung und ein zu waschendes Fahrzeug in Waschrichtung relativ zueinander bewegt werden, die Fahrzeugoberflächen von zwei Lichtfächern ausgehend von unterschiedlichen Positionen beleuchtet werden, eine erste und eine zweite zweidimensionale Darstellungen der von den Lichtfächer beleuchteten Fahrzeugoberflächen aus Aufnahmewinkeln, die schräg zu den Ebenen der Lichtfächer liegen, aufgenommen und zusammen mit der relativen Position und/oder der relativen Bewegung von Behandlungseinrichtungen (und Fahrzeug in einer Steuereinheit gespeichert werden).

Es ist daher die technische Aufgabe der vorliegenden Erfindung, Beschädigungen eines Fahrzeugs bei der Fahrzeugwäsche in einer Fahrzeugwaschanlage zu vermeiden und ein Waschprogramm automatisch zu ermitteln.

Diese Aufgabe wird durch Gegenstände nach den unabhängigen Ansprüchen gelöst. Vorteilhafte Ausführungsformen sind Gegenstand der abhängigen Ansprüche, der Beschreibung und der Figuren.

Gemäß einem ersten Aspekt wird die Aufgabe durch ein Verfahren zum automatischen Erkennen einer Ladefläche eines Fahrzeugs gelöst, mit den Schritten eines Ermittelns einer Seitenkontur eines Fahrzeugs; eines Ermitteln eines Höhenprofils des Fahrzeugs; eines Berechnens einer Abweichung zwischen der Seitenkontur und dem Höhenprofil; und eines Ermittelns der Ladefläche auf Basis der Abweichung. Die Seitenkontur gibt den Höhenverlauf des Fahrzeuges über dem Boden in der Seitenansicht an. Das Höhenprofil gibt den Höhenverlauf des Fahrzeuges über dem Boden in der Aufsicht an, wie beispielsweise in der Fahrzeugmitte.

Durch das Verfahren kann die Bedienung einer Fahrzeugwaschanlage vereinfacht werden und Beschädigungen bei der Fahrzeugwäsche vermieden werden. Die Programmabläufe der Fahrzeugwäsche können automatisch auf das Fahrzeug abgestimmt werden. Durch die automatische Erkennung und Vermessung von Ladeflächen kann das Programm den Waschprozess optimal anpassen. Durch die Abweichung kann zudem die Tiefe der Ladefläche gegenüber einer Bordwand bestimmt werden.

In einer technisch vorteilhaften Ausführungsform des Verfahrens wird die Position und/oder Ausdehnung der Ladefläche aus einem Verlauf der Abweichung ermittelt. Die Ladefläche befindet sich zwischen den Stellen, an denen die Abweichung zwischen dem Höhenprofil und der Seitenkontur ansteigt und abfällt. Dadurch kann auf die Position und Länge der Ladefläche geschlossen werden. Dadurch wird beispielsweise der technische Vorteil erreicht, dass ein Absenken der Bürste in diesem Bereich exakt verhindert werden kann.

In einer weiteren technisch vorteilhaften Ausführungsform des Verfahrens wird die Seitenkontur durch eine elektronische Kamera ermittelt, die eine Seitenansicht des Fahrzeugs aufzeichnet. Durch eine Bilderkennung kann die Seitenkontur des Fahrzeugs ermittelt werden. Dadurch wird beispielsweise der technische Vorteil erreicht, dass die Seitenkontur auf schnelle Art und Weise ermittelt werden kann.

In einer weiteren technisch vorteilhaften Ausführungsform des Verfahrens wird die Seitenkontur durch ein Lichtgitter ermittelt, das sich entlang des Fahrzeugs bewegt. Dadurch wird beispielsweise der technische Vorteil erreicht, dass die Seitenkontur präzise bestimmt werden kann.

In einer weiteren technisch vorteilhaften Ausführungsform des Verfahrens wird die Seitenkontur durch einen Ultraschall- oder Radarsensor ermittelt. Dadurch wird beispielsweise der technische Vorteil erreicht, dass die Seitenkontur auch bei schlechten Lichtverhältnissen oder Sprühnebel ermittelt werden kann.

In einer weiteren technisch vorteilhaften Ausführungsform des Verfahrens wird das Höhenprofil in der Fahrzeugmitte ermittelt. Dadurch wird beispielsweise der technische Vorteil erreicht, dass Höhenprofil den Bereich der Ladefläche zuverlässig abdeckt.

In einer weiteren technisch vorteilhaften Ausführungsform des Verfahrens wird das Höhenprofil durch eine Laufzeitmessung von Licht ermittelt. Dadurch wird beispielsweise der technische Vorteil erreicht, dass das Höhenprofil mit geringem Aufwand erfasst werden kann.

In einer weiteren technisch vorteilhaften Ausführungsform des Verfahrens wird das Höhenprofil durch Triangulation von Licht ermittelt. Dadurch wird beispielsweise ebenfalls der technische Vorteil erreicht, dass das Höhenprofil mit geringem Aufwand erfasst werden kann.

In einer weiteren technisch vorteilhaften Ausführungsform des Verfahrens wird das Höhenprofil durch einen Ultraschallsensor oder einen Radarsensor ermittelt. Dadurch wird beispielsweise der technische Vorteil erreicht, dass das Höhenprofil auch bei schlechten Lichtverhältnissen oder Sprühnebel ermittelt werden kann.

In einer weiteren technisch vorteilhaften Ausführungsform des Verfahrens wird ein erstes Höhenprofil durch einen Radarsensor und ein zweites Höhenprofil durch einen Lichtsensor ermittelt. Befindet sich eine Abdeckplane über der Ladefläche, wird der Radarstrahl des Radarsensors von den Metallteilen der Ladefläche reflektiert. Der Lichtstrahl des Lichtsensors wird hingegen von der Abdeckplane reflektiert. Weicht das erste Höhenprofil von dem zweiten Höhenprofil ab, kann auf das Vorhandensein einer Plane auf der Ladefläche geschlossen werden. Dadurch wird beispielsweise der technische Vorteil erreicht, dass die Plane mit einem geringeren Druck der Bürste gereinigt werden kann und Beschädigungen verhindert werden.

In einer weiteren technisch vorteilhaften Ausführungsform des Verfahrens wird das Verfahren in einer Fahrzeugwaschanlage eingesetzt. Dadurch wird beispielsweise der technische Vorteil erreicht, dass die Fahrzeugwaschanlage das Vorliegen einer Ladefläche bei der Reinigung berücksichtigen kann.

Gemäß einem zweiten Aspekt wird die Aufgabe durch eine Fahrzeugwaschanlage gelöst, mit einem ersten Messsystem zum Ermitteln einer Seitenkontur eines Fahrzeugs; einem zweiten Messsystem zum Ermitteln eines Höhenprofils des Fahrzeugs; und einem elektronischen Steuergerät zum Berechnen einer Abweichung zwischen der Seitenkontur und dem Höhenprofil und Ermitteln der Ladefläche auf Basis der Abweichung. Dadurch werden die gleichen technischen Vorteile wie durch das Verfahren nach dem ersten Aspekt erreicht.

Ausführungsbeispiele der Erfindung sind in den Zeichnungen dargestellt und werden im Folgenden näher beschrieben.

Es zeigen:
- Fig. 1: eine Seitenansicht und eine Aufsicht auf ein Fahrzeug mit einer Ladefläche;

- Fig. 2: eine schematische Ansicht einer Fahrzeugwaschanlage; und
- Fig. 3: ein Blockdiagramm des Verfahrens.

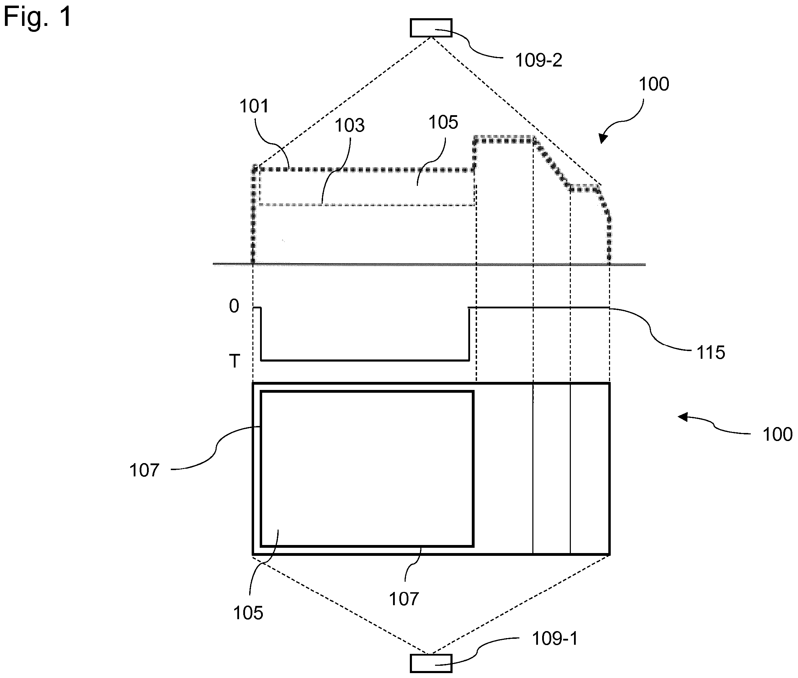

Fig. 1 zeigt eine Seitenansicht und eine Aufsicht auf ein Fahrzeug 100 mit einer Ladefläche 105. Bei dem Fahrzeug 100 handelt es sich um ein Pick-Up-Fahrzeug mit einer rückwärtigen Ladefläche 105, die teilweise von senkrechten Bordwänden 107 umgeben ist.

Dieser Fahrzeugtyp kann durch ein Verfahren erkannt werden, das zwei Messsysteme zur Vermessung des Fahrzeugs 100 verwendet. Das erste Messsystem 109-1 ermittelt die Seitenkontur 101 des Fahrzeugs 100 in einer Seitenansicht, zu der die Bordwand 107 der Ladefläche 105 beiträgt. Die Seitenkontur 101 bestimmt den Höhenverlauf des Fahrzeugs 100 gegenüber dem Boden in der Seitenansicht.

Das Messsystem 109-1 ermittelt die Seitenkontur 101 des Fahrzeugs 100 durch ein Scannen der Seitenflächen. Zu diesem Zweck können Lichtgitter verwendet werden, die an einem Portal der Fahrzeugwaschanlage mitfahrend angeordnet sind. In gleicher Weise sind bildgebende Verfahren anwendbar, die die Seitenkontur 101 des Fahrzeugs 100 anhand einer Bildaufnahme ermitteln. Anstelle von optischen Sensoren sind ebenfalls Ultraschall oder Radarsensoren einsetzbar.

Ein zweites Messsystem 109-2 ermittelt das Höhenprofil 103 des Fahrzeugs 100 von oberhalb des Fahrzeugs. Das Höhenprofil 103 bestimmt den Höhenverlauf des Fahrzeugs 100 gegenüber dem Boden in der Aufsicht, wie beispielsweise in der Fahrzeugmitte. Das zweite Messsystem 109-2 ermittelt das Höhenprofil 103 des Fahrzeugs 100 von oben. Dieses Messsystem 109-2 kann über eine Laufzeit oder eine Triangulation von Licht, mittels Ultraschall oder Radar das Höhenprofil 103 des Fahrzeugs 100 erfassen.

Weicht das Höhenprofil 103 des Fahrzeugs 100 von der Seitenkontur 101 ab, so wird auf das Vorliegen einer Ladefläche 105 mit seitlicher Bordwand 107 geschlossen und ein entsprechender Waschablauf ausgewählt. Durch die Verwendung von zwei unabhängigen Messsystemen 109-1 und 109-2 ist es möglich, die Ladefläche 105 mit der Bordwand 107 zu erkennen und deren Position sowie Tiefe T zu vermessen.

Durch ein Vergleichen der ermittelten Seitenkontur 101 und des Höhenprofils 103 des Fahrzeugs 100 kann die Steuerung der Fahrzeugwaschanlage die Position einer vorhandenen Ladefläche 105 eindeutig errechnen, da die Seitenkontur 101 vom Messsystem 109-1 die Bordwände 107 umfasst und das Höhenprofil 103 vom Messsystem 109-2 die tieferliegende Ladefläche 105 erkennt. Die Abweichung 115 kann durch eine Differenz aus der Seitenkontur 101 und dem Höhenprofil 103 ermittelt werden. Liegt das Höhenprofil 103 des Messsystems 109-2 tiefer als die Seitenkontur 101 des Messsystems 109-1 weist das Fahrzeug 100 in diesem Bereich eine Ladefläche 105 auf und das Programm der Fahrzeugwaschanlage kann die vorgesehenen Behandlungsroutinen anwenden.

Aus dem Verlauf der Abweichung 115 kann zudem auf die genaue Position und Ausdehnung der Ladefläche 105 geschlossen werden. Die Ladefläche 105 befindet sich zwischen den Stellen, an denen die Abweichung 115 zwischen dem Höhenprofil 103 und der Seitenkontur 101 ansteigt und abfällt. In diesem Bereich kann eine Drehmomentsteuerung der Bürste gezielt ausgesetzt werden, so dass eine Beschädigung des Fahrzeugs oder der Bürste verhindert wird.

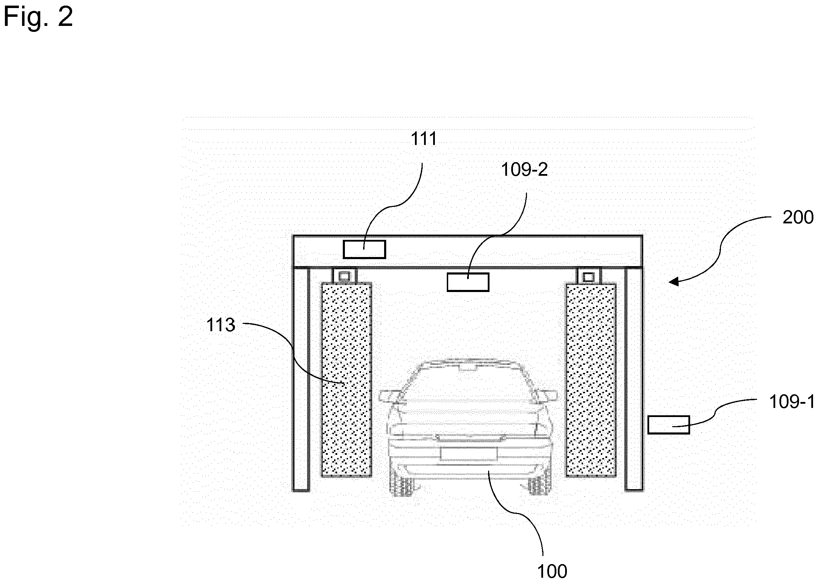

Fig. 2 zeigt eine schematische Ansicht einer Fahrzeugwaschanlage 200. Die Fahrzeugwaschanlage 200 dient zum automatischen Reinigen von Fahrzeugen 200, wie beispielsweise Autos oder Lastwagen. Der Reinigungsvorgang wird mechanisch mittels rotierender Bürsten 113 unter Verwendung von Wasser und weiteren flüssigen, chemischen Waschsubstanzen durchgeführt, wie beispielsweise Reinigungs- oder Pflegesubstanzen. Die Fahrzeugwaschanlage 200 ist beispielsweise eine Portalwaschanlage oder eine Waschstraße für Kraftfahrzeuge, eine Nutzfahrzeugwaschanlage oder eine Waschanlage für Schienenfahrzeuge. Die Fahrzeugwaschanlage 200 wird zu diesem Zweck elektronisch durch ein Steuergerät 111 unter Verwendung von Steuerdaten gesteuert.

Das erste Messsystem 109-1 dient zum Ermitteln der Seitenkontur 101 des Fahrzeugs 100 und ist seitlich neben dem Fahrzeug 100 angeordnet. Das zweite Messsystem 109-2 dient zum Ermitteln des Höhenprofils 103 des Fahrzeugs 100 und ist oberhalb des Fahrzeugs 100 angeordnet. Durch die beiden Messsysteme 109-1 und 109-2 lassen sich digitale Daten über die Seitenkontur 101 und das Höhenprofil 103 des Fahrzeugs gewinnen. Diese Daten können entweder in den Messsystemen 109-1 und 109-2 erhalten werden oder durch eine Verarbeitung von Rohdaten in dem Steuergerät 111 ermittelt werden.

Anhand der digitalen Daten kann eine Abweichung zwischen der Seitenkontur 101 und dem Höhenprofil 103 durch das Steuergerät 111 berechnet werden. Überschreitet die Abweichung beispielsweise einen vorgegebenen Wert, kann erkannt werden, dass es sich bei dem Fahrzeug 100 um ein Fahrzeug 100 mit einer Ladefläche 105 handelt, die Bordwänden 107 umgeben ist. Liegt die Abweichung beispielsweise unter dem vorgegebenen Wert, kann erkannt werden, dass es sich um ein Fahrzeug 100 ohne Ladefläche 105 handelt, wie beispielsweise eine Limousine. Somit kann das Vorliegen einer Ladefläche 105 auf Basis der Abweichung ermittelt werden.

Das Messsystem 109-1 zum Erfassen der Seitenkontur 101 umfasst beispielsweise eine elektronische Kamera, ein Lichtgitter, einen Ultraschallsensor oder einen Radarsensor, der sich entlang des Fahrzeugs bewegt. Bei Verwendung einer elektronischen Kamera wird eine seitliche Aufnahme mit Bilddaten des Fahrzeugs 100 erzeugt. Die Bilddaten werden mittels eines Analysealgorithmus ausgewertet, um eine Seitenkontur 101 des Fahrzeugs 100 zu bestimmen. Bei der Verwendung eines Lichtgitters umfasst das Messsystem 109-1 eine Sender- und Empfängerleiste, zwischen denen sich parallele Lichtstrahlen erstrecken. Die Sender- und Empfängerleiste wird beispielsweise zusammen mit dem Portal der Fahrzeugwaschanlage 200 verfahren. Je nachdem welche der Lichtstrahlen durch das Fahrzeug 100 bei der Bewegung unterbrochen werden, kann eine Seitenkontur 101 des Fahrzeugs ermittelt werden.

Das Messsystem 109-1 zum Erfassen der Seitenkontur 101 kann einen Ultraschallsensor oder einen Radarsensor umfassen. Mit dem Ultraschallsensor oder einen Radarsensor kann die Seitenkontur 101 des Fahrzeugs 100 beispielsweise nicht-optisch erfasst werden, so dass diese auch bei schlechten Sichtverhältnissen oder Sprühnebel in der Fahrzeugwaschanlage 200 sicher erfasst werden kann. Im Allgemeinen kann jedoch jedes Messsystem 109-1 verwendet werden, das die Erfassung der Seitenkontur 101 des Fahrzeugs 100 erlaubt.

Das Messsystem 109-2 zum Ermitteln des Höhenprofils 103 umfasst beispielsweise ein System zur Laufzeitmessung von Licht, ein System zur Triangulation von Licht, einen Ultraschallsensor oder einen Radarsensor.

Bei der Laufzeitmessung sendet eine Laserdiode einen Laserpuls mit einer aufmodulierten Frequenz, der von dem Fahrzeug 100 reflektiert wird. Der reflektierte Lichtstrahl wird von einer Linse gebündelt auf eine optoelektronische Empfängereinheit geleitet. Abhängig von der Entfernung des Fahrzeugs 100 trifft der reflektierte Laserstrahl mit einer jeweiligen Verzögerung auf die Empfängereinheit.

Über die bekannte Lichtgeschwindigkeit in Luft wird von der Auswerteeinheit mit Hilfe der gemessenen Laufzeit des Laserstrahls der Abstand des Fahrzeugs 100 berechnet. Zusätzlich kann eine Phasenmessung durchgeführt werden, bei der anhand einer Phasenverschiebung zwischen einem Referenzlichtstrahl und dem reflektierten Lichtstrahl die genaue Verzögerung ermittelt wird. Bei der Triangulation von Licht wird ein Laserstrahl oder die Strahlung einer Leuchtdiode auf das Fahrzeug 100 fokussiert und mit einer im Sensor angeordneten Kamera, einer ortsauflösenden Photodiode oder einer CCD-Zeile erfasst. Ändert sich die Entfernung des Fahrzeugs 100 vom Sensor, ändert sich auch der Winkel, unter dem der Lichtpunkt beobachtet wird, so dass sich die Position des Abbildes auf dem Fotoempfänger verschiebt. Aus der Positionsänderung des Lichtpunktes in Abhängigkeit der Entfernung wird mit Hilfe der Winkelfunktionen die Entfernung des Fahrzeugs vom Messsystem 109-2 berechnet.

Der Ultraschallsensor oder Radarsensor können die Entfernung des Fahrzeugs ebenfalls durch eine Laufzeitberechnung bestimmen und ermöglichen die Ermittlung des Höhenprofils 103 auf dann, dann optisch schwierige Bedingungen vorliegen, wie beispielweise bei Wassertropfen in der Luft.

Zudem kann das Messsystem 109-2 einen Radarsensor als auch einen Lichtsensor umfassen. Der Radarsensor erfasst ein erstes Höhenprofil 103, während der Lichtsensor ein zweites Höhenprofil 103 des Fahrzeuges 100 erfasst. Befindet sich eine Abdeckplane über der Ladefläche 105, wird der Radarstrahl des Radarsensors von den Metallteilen der Ladefläche 105 reflektiert. Der Lichtstrahl des Lichtsensors wird hingegen von der darüber liegenden Abdeckplane reflektiert. Weicht das erste Höhenprofil 103 von dem zweiten Höhenprofil 103 ab, kann auf das Vorhandensein einer Plane auf der Ladefläche 105 geschlossen werden und das Waschprogramm entsprechend angepasst werden. Im Allgemeinen kann jedoch jedes Messsystem 109-2 verwendet werden, dass die Erfassung des Höhenprofils 103 des Fahrzeugs 100 erlaubt.

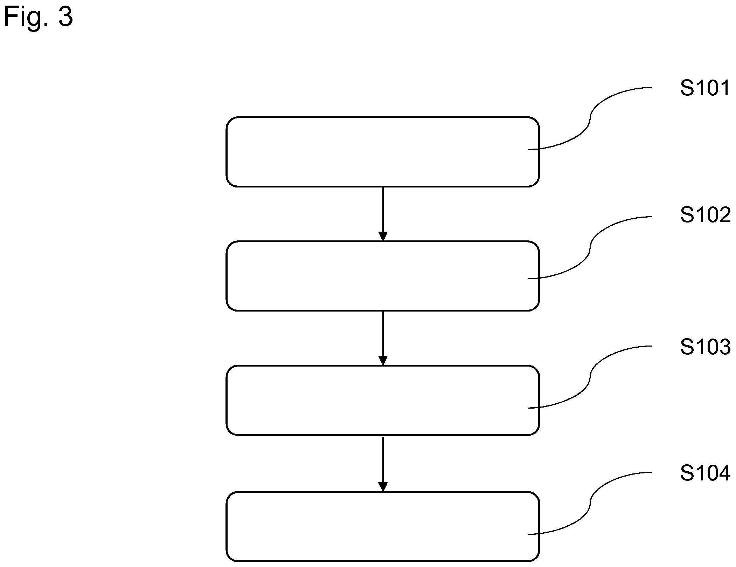

Fig. 3 zeigt ein Blockdiagramm des Verfahrens. Das Verfahren dient beispielsweise zur Erkennung und Vermessung von Fahrzeugkonturen in Fahrzeugwaschanlagen. Durch eine Erkennung und Vermessung von Fahrzeugen 100 mit Ladeflächen 105 können die Behandlungsabläufe für diese Fahrzeugtypen in der Fahrzeugwaschanlage optimal angepasst werden.

Das Verfahren umfasst den Schritt S101 eines Ermittelns der Seitenkontur 101 des Fahrzeugs 100 und den Schritt S102 eines Ermittelns des Höhenprofils 103 des Fahrzeugs 100. Anschließend wird der Schritt S103 des Berechnens einer Abweichung zwischen der Seitenkontur 101 und dem Höhenprofil 103 durchgeführt. Im Schritt S104 wird der Fahrzeugtyp oder die Ladefläche auf Basis der Abweichung ermittelt.

Durch das Verfahren wird die Bedienung der Fahrzeugwaschanlage 200 vereinfacht und es werden Beschädigungen des Fahrzeugs 100 bei der Wäsche vermieden. Die Programmabläufe können besser auf die Fahrzeuge 100 abgestimmt werden. Durch die automatische Erkennung und Vermessung der Ladeflächen 105 unabhängig vom Fahrzeugtyp, sowie der Lage und der Größe der Ladefläche 105 kann das Programm den Waschprozess optimal anpassen.

Die zu behandelnde Fahrzeugart braucht nicht mehr manuell vorgewählt zu werden. Eine Fehlerkennung von Fahrzeugen 100, deren Ladeflächen 105 nicht in den vordefinierten Bereichen der bisherigen Systeme liegen, ist ausgeschlossen. Daneben wird verhindert, dass es durch eine falsche Eingabe bei der manuellen Vorwahl zu Problemen bei der Fahrzeugwäsche kommt.

Eine sensorische Erkennung des Fahrzeugtyps über charakteristische Unterschiede von unterschiedlich ermittelten Konturdaten in der Seitenansicht und in der Aufsicht ist universell für alle aktuellen und zukünftigen Fahrzeuge anwendbar.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHEN

- 100: Fahrzeug
- 101: Seitenkontur
- 103: Höhenprofil
- 105: Ladefläche
- 107: Bordwand
- 109: Messsystem
- 111: Steuergerät
- 113: Bürste
- 115: Abweichung

- 200: Fahrzeugwaschanlage

## Patentansprüche

1. Verfahren zum automatischen Erkennen einer tieferliegenden Ladefläche (105) eines Fahrzeugs (100) mit einer zumindest teilweise seitlichen Bordwand (107), mit den Schritten:
Ermitteln (S101) einer Seitenkontur (101) eines Fahrzeugs (100) ;
Ermitteln (S102) eines Höhenprofils (103) des Fahrzeugs (100) ;
Berechnen (S103) einer Abweichung (115) zwischen der Seitenkontur (101) und dem Höhenprofil (103); und
Ermitteln (S104) der Ladefläche (105) auf Basis der Abweichung (115) sowie der Position und/oder Ausdehnung der Ladefläche (105) aus einem Verlauf der Abweichung (115).

2. Verfahren nach Anspruch 1, wobei die Tiefe (T) der Ladefläche (105) gegenüber der Bordwand (107) des Fahrzeugs (100) ermittelt wird.

3. Verfahren nach einem der vorangehenden Ansprüche, wobei die Seitenkontur (101) durch eine elektronische Kamera ermittelt wird, die eine Seitenansicht des Fahrzeugs (100) aufzeichnet.

4. Verfahren nach Anspruch 1 oder 2, wobei die Seitenkontur (101) durch ein Lichtgitter ermittelt wird, das sich entlang des Fahrzeugs bewegt.

5. Verfahren nach Anspruch 1 oder 2, wobei die Seitenkontur (101) durch einen Ultraschallsensor oder einen Radarsensor ermittelt wird.

6. Verfahren nach einem der vorangehenden Ansprüche, wobei das Höhenprofil (103) in der Fahrzeugmitte ermittelt wird.

7. Verfahren nach einem der vorangehenden Ansprüche, wobei das Höhenprofil (103) durch eine Laufzeitmessung von Licht ermittelt wird.

8. Verfahren nach einem der Ansprüche 1 bis 7, wobei das Höhenprofil (103) durch Triangulation von Licht ermittelt wird.

9. Verfahren nach einem der Ansprüche 1 bis 7, wobei das Höhenprofil (103) durch einen Ultraschallsensor oder einen Radarsensor ermittelt wird.

10. Verfahren nach einem der Ansprüche 1 bis 7, wobei ein erstes Höhenprofil (103) durch einen Radarsensor und ein zweites Höhenprofil (103) durch einen Lichtsensor ermittelt wird.

11. Verfahren nach einem der vorangehenden Ansprüche, wobei das Verfahren in einer Fahrzeugwaschanlage (200) eingesetzt wird.

12. Fahrzeugwaschanlage (200) geeignet zur Ausführung eines Verfahrens nach zumindest einem der vorangehenden Verfahrensansprüche, mit:
einem ersten Messsystem (109-1) zum Ermitteln (S101) einer Seitenkontur (101) eines Fahrzeugs (100);
einem zweiten Messsystem (109-2) zum Ermitteln (S102) eines Höhenprofils (103) des Fahrzeugs (100); und
einem elektronischen Steuergerät (111) zum Berechnen (S103) einer Abweichung zwischen der Seitenkontur (101) und dem Höhenprofil (103) und Ermitteln (S104) der Ladefläche auf Basis der Abweichung.

## Claims

1. Method for automatically detecting a lower-lying loading area (105) of a vehicle (100) with an at least partially lateral side wall (107), comprising the steps
Determining (S101) a side contour (101) of a vehicle (100);
Determining (S102) a height profile (103) of the vehicle (100) ;
Calculating (S103) a deviation (115) between the side contour (101) and the height profile (103); and
Determining (S104) the loading area (105) on the basis of the deviation (115) and the position and/or extent of the loading area (105) from a course of the deviation (115).

2. Method according to claim 1, wherein the depth (T) of the loading area (105) is determined relative to the side wall (107) of the vehicle (100).

3. Method according to one of the preceding claims, wherein the side contour (101) is determined by an electronic camera recording a side view of the vehicle (100).

4. Method according to claim 1 or 2, wherein the side contour (101) is determined by a light grid moving along the vehicle.

5. Method according to claim 1 or 2, wherein the side contour (101) is determined by an ultrasonic sensor or a radar sensor.

6. Method according to one of the preceding claims, wherein the height profile (103) is determined in the centre of the vehicle.

7. Method according to one of the preceding claims, wherein the height profile (103) is determined by a runtime measurement of light.

8. Method according to any one of claims 1 to 7, wherein the height profile (103) is determined by triangulation of light.

9. Method according to one of claims 1 to 7, wherein the height profile (103) is determined by an ultrasonic sensor or a radar sensor.

10. Method according to one of claims 1 to 7, wherein a first height profile (103) is determined by a radar sensor and a second height profile (103) is determined by a light sensor.

11. Method according to one of the preceding claims, wherein the method is used in a vehicle washing system (200).

12. Vehicle washing system (200) suitable for carrying out a mehtod according to at least one of the preceding method claims, comprising:
a first measuring system (109-1) for determining (S101) a side contour (101) of a vehicle (100);
a second measuring system (109-2) for determining (S102) a height profile (103) of the vehicle (100); and
an electronic control unit (111) for calculating (S103) a deviation between the side contour (101) and the height profile (103) and determining (S104) the loading area based on the deviation.

## Revendications

1. Procédé de détection automatique d'une surface de chargement (105) située plus bas d'un véhicule (100) avec une ridelle (107) au moins partiellement latérale, comprenant les étapes suivantes :
Détermination (S101) d'un contour latéral (101) d'un véhicule (100) ;
Déterminer (S102) un profil de hauteur (103) du véhicule (100) ;
calculer (S103) un écart (115) entre le contour latéral (101) et le profil d'élévation (103) ; et
Déterminer (S104) la surface de chargement (105) sur la base de l'écart (115) ainsi que la position et/ou l'étendue de la surface de chargement (105) à partir d'une évolution de l'écart (115).

2. Procédé selon la revendication 1, dans lequel la profondeur (T) de la surface de chargement (105) par rapport à la ridelle (107) du véhicule (100) est déterminée.

3. Procédé selon l'une quelconque des revendications précédentes, dans lequel le contour latéral (101) est déterminé par une caméra électronique enregistrant une vue latérale du véhicule (100).

4. Procédé selon la revendication 1 ou 2, dans lequel le contour latéral (101) est déterminé par une barrière immatérielle se déplaçant le long du véhicule.

5. Procédé selon la revendication 1 ou 2, dans lequel le contour latéral (101) est déterminé par un capteur à ultrasons ou un capteur radar.

6. Procédé selon l'une des revendications précédentes, dans lequel le profil de hauteur (103) est déterminé au centre du véhicule.

7. Procédé selon l'une des revendications précédentes, dans lequel le profil de hauteur (103) est déterminé par une mesure du temps de parcours de la lumière.

8. Procédé selon l'une des revendications 1 à 7, dans lequel le profil d'altitude (103) est déterminé par triangulation de la lumière.

9. Procédé selon l'une des revendications 1 à 7, dans lequel le profil d'altitude (103) est déterminé par un capteur à ultrasons ou un capteur radar.

10. Procédé selon l'une des revendications 1 à 7, dans lequel un premier profil d'altitude (103) est déterminé par un capteur radar et un deuxième profil d'altitude (103) est déterminé par un capteur de lumière.

11. Procédé selon l'une des revendications précédentes, dans lequel le procédé est utilisé dans une installation de lavage de véhicules (200).

12. installation de lavage de véhicules (200) apte à mettre en œuvre un procédé selon les revendications précédentes, avec :
un premier système de mesure (109-1) pour déterminer (S101) un contour latéral (101) d'un véhicule (100) ;
un deuxième système de mesure (109-2) pour déterminer (S102) un profil de hauteur (103) du véhicule (100) ; et
un dispositif de commande électronique (111) pour calculer (S103) un écart entre le contour latéral (101) et le profil de hauteur (103) et déterminer (S104) la surface de chargement sur la base de l'écart.
